# EUROPÄISCHE PATENTSCHRIFT

(11) **EP 2 019 761 B1**
(45) Veröffentlichungstag und Bekanntmachung des Hinweises auf die Patenterteilung: **28.04.2021**
(21) Anmeldenummer: 07726918.1
(22) Anmeldetag: 15.03.2007
(51) Int. Cl.: B60L 7/24, B60L 7/26, B60L 7/06

(54) **VERFAHREN ZUR BREMSUNG VON ELEKTRISCH ANGETRIEBENEN FAHRZEUGEN**
METHOD FOR BRAKING ELECTRICALLY DRIVEN VEHICLES
PROCÉDÉ POUR LE FREINAGE DE VÉHICULES ENTRAÎNÉS ÉLECTRIQUEMENT

(30) Priorität: 23.05.2006 DE 102006024239
(43) Veröffentlichungstag der Anmeldung: 04.02.2009
(73) Patentinhaber: Siemens Mobility GmbH, 81739 München (DE)
(72) Erfinder: FUCHS, Andreas, 91056 Erlangen (DE); JACOBI VON WANGELIN, Frank, 91058 Erlangen (DE); LASKA, Bernd, 91074 Herzogenaurach (DE); LÖWENSTEIN, Lars, 91093 Hessdorf (DE)
(86) Internationale Anmeldenummer: PCT/EP2007/052427
(87) Internationale Veröffentlichungsnummer: WO 2007/134889

(56) Entgegenhaltungen:
- EP-A1- 0 666 431
- EP-A1- 0 758 591
- DE-A1-102004 032 680
- US-A- 3 845 991
- US-A- 5 378 053

## Beschreibung

Die Erfindung betrifft ein Verfahren zur Bremsung von elektrisch angetriebenen Fahrzeugen, insbesondere von Schienenfahrzeugen, deren Antrieb mit permanenterregten Synchronmaschinen erfolgt.

Nach dem Stand der Technik erfolgt die Bremsung von Schienenfahrzeugen durch eine elektro-pneumatische Bremsausrüstung. Die Auslegung solcher Anlagen basiert auf der maximalen Fahrzeugbeladung unter Annahme ungünstiger Umgebungsbedingungen (z. B. Reibwert) .

Eine ungeregelte Bremsung würde zum Beispiel bei Teilbeladung ein Überschreiten der geforderten Verzögerungen zur Folge haben. Üblicherweise erfolgt die Einstellung/Regelung der mechanischen Bremse durch eine lastabhängige Veränderung des Bremsdruckes
Beispiel einer geregelte Bremsung ist in US-3 845 991-A zu finden, worin die Reibungsbremsen und Bremsung durch die Antriebsmotoren kombiniert worden. In US-5 378 053-A ist Steuerung der Reibungsbremsen und Bremsung durch die Antriebsmotor anhand einer Verzögerungskennlinie beschrieben.

Nach neustem Entwicklungsstand werden zum Antrieb von Fahrzeugen, insbesondere Schienenfahrzeugen, permanenterregte Synchronmaschinen mit separaten elektrischen Bremskreisläufen eingesetzt.

Die Schrift DE 10 2004 032 680 A1 offenbart eine Motorbremse für ein elektrisch angetriebenes Fahrzeug, insbesondere für ein Schienenfahrzeug, mit einer permanenterregten Synchronmaschine, wobei Klemmen der Synchronmaschine über Schalter mit ein Bremsmoment erzeugenden Einrichtungen in Verbindung stehen. Dabei ist vorgesehen, dass mindestens zu einer der ein Bremsmoment erzeugenden Einrichtungen ein Kondensator parallelgeschaltet ist, um durch Veränderung des Arbeitspunktes der Synchronmaschine eine erhöhte Bremsleistung zu gewährleisten.

Beispielsweise sind die ein Bremsmoment erzeugenden Einrichtungen Bremswiderstände, die veränderlich sein können.

Durch Beschaltung einer permanenterregten Synchronmaschine mit ohmschen Widerständen (R) bzw. Kombinationen von ohmschen Widerständen und Kondensatoren (RC) wird die Wirkung der Motorbremse hinsichtlich der Drehzahl der Synchronmaschine optimiert und kann eine sichere elektrische Bremse, insbesondere für Schienenfahrzeuge, realisiert werden.

Stark unterschiedliche Randbedingungen, wie z. B. Beladungszustand des Fahrzeugs, Temperatur der Motoren und insbesondere der Magnete, sowie Redundanzanforderungen, führen bei der beschriebenen Beschaltung der permanenterregten Synchronmaschine dazu, dass mit einer festen Dimensionierung von R bzw. RC nicht in allen Fällen beim Bremsen die vom Betreiber oder in Normen vorgegebenen Grenzwerte für die Bremsverzögerung eingehalten werden.

Bei gleichzeitiger Aktivierung aller vorhandenen Bremsanlagen, d.h. ohne steuernden Eingriff, werden bei einer Reihe von Systemzuständen die Grenzwerte der Verzögerung überschritten.

Ein derartiges Verhalten wird durch die Betreiber nicht akzeptiert und verhindert den Einsatz einer sicheren elektrischen Bremse für Schienenfahrzeuge.

Der Erfindung lag deshalb die Aufgabe zugrunde, das Verhalten des Bremssystems direkt abhängig vom Systemzustand, d.h. von den genannten Randbedingungen des Fahrzeugs optimal zu gestalten und damit den Entfall der heute in Fahrzeugen vorhandenen vollwertigen mechanischen Bremse (zu unterscheiden von der mechanischen Feststellbremse für den Parkzustand) zu erreichen.

Die Lösung der Aufgabe erfolgt entsprechend den Merkmalen des Anspruchs 1; die Unteransprüche geben zweckmäßige Ausgestaltungen der Erfindung wieder.

Erfindungsgemäß wird zur Bremsung von elektrisch angetriebenen Fahrzeugen, insbesondere von Schienenfahrzeugen, die mit federspeicherbasierten Reibungsbremsen ausgestattet sind und deren motorischer Antrieb mit permanenterregten Synchronmaschinen erfolgt, wobei die Klemmen der Synchronmaschine über Schalter mit ein Bremsmoment erzeugenden Einrichtungen in Verbindung stehen, eine Steuerung oder Regelung aktiviert, die in Abhängigkeit von den tatsächlichen Betriebsverhältnissen (Bremsperformance) des Fahrzeugs und den geforderten Bremswerten die federspeicherbasierten Reibungsbremsen und die Bremsung der vorhandenen Motoren einzeln und nacheinander zuschaltet.

In Abhängigkeit von der Systemarchitektur ist sowohl die Bremsleistung jedes Motors, als auch die Bremsleistung der federspeicherbasierten Reibungsbremsen einzeln und voneinander unabhängig zuschaltbar und somit die Forderung nach einer sicheren Gesamtbremsleistung zu erfüllen.

Zur Erfassung des Systemzustandes werden als Eingangsgröße zur Steuerung/Regelung der Gesamtbremsleistung des Fahrzeuges beispielsweise die folgenden Betriebsgrößen des Fahrzeuges ermittelt:
- Messung der Verzögerung durch geeignete Sensoren,
- Messung der Motorströme und Berechnung durch Maschinenmodell,
- Messung der Nulldurchgänge der Motorspannungen und Ermittlung der Verzögerung durch Varianzbestimmung,
- Messung der Motor- bzw. Zwischenkreisleistung,
- Messung der Leistung am Bremswiderstand,
- Messung der Drehzahlen,
- Temperaturerfassungen,
- Lastzyklenerfassung in Kombination mit Luftfederdruckerfassung.

Anhand der erfassten Betriebswerte wird eine Ist-Kennlinie gebildet und mit einer zur Einhaltung der geforderten Bremswerte gültigen Soll-Kennlinie verglichen. Solange eine negative Soll-Ist-Abweichung, d.h. ein Unterschreiten des Sollwertes, besteht, werden unter Berücksichtigung eines Toleranzbandes nacheinander die Bremsung der Motoren, durch Zuschaltung der Motoren an die R- bzw. RC-Beschaltung, bzw. der federspeicherbasierten Reibungsbremsen aktiviert.

Auch ist vorgesehen, eine aus der Drehzahl der Motoren und der Beschleunigung des Fahrzeugs gebildete Ist- Kennlinie mit einer in einem nichtflüchtigen Speicher hinterlegten Soll-Kennlinie zu vergleichen und bei negativer Soll-Ist-Abweichung die Bremsung der Motoren bzw. der federspeicherbasierten Reibungsbremsen zuzuschalten.

Zweckmäßigerweise wird ein logischer Verschlussmechanismus vorgesehen, der das gleichzeitige Zuschalten von mehr als einer Brems-Komponente verhindert.

Abweichend davon können aber auch alle federspeicherbasierten Reibungsbremsen gemeinsam zugeschaltet werden.

Durch die Möglichkeit, elektrische und mechanische Bremsleistung einzeln und nacheinander zuzuschalten, kann die zur Verfügung gestellte Bremskraft gesteuert und damit Einflüsse durch Randbedingungen, wie z. B. Beladungszustand des Fahrzeugs, Temperatur der Motoren und insbesondere der Magnete, ausgeglichen werden.

Der Bremsverlauf erfolgt nach der projektierbaren Soll-Kennlinie. Geforderte Grenzwerte der Brems-Verzögerung werden eingehalten. Zusätzlich wird der unerwünschte Ruck bei Bremseinsatz begrenzt.

Durch die Erfindung können der Einsatz der sicheren elektrischen Bremse und damit der Entfall der heute in Fahrzeugen vorhandenen vollwertigen mechanischen Bremse erreicht sowie Komfort- und Verzögerungsanforderungen bei der Bremsung elektrisch betriebener Fahrzeuge erfüllt werden.

## Patentansprüche

1. Verfahren zur Bremsung von elektrisch angetriebenen Schienenfahrzeugen, die mit federspeicherbasierten Reibungsbremsen ausgestattet sind und deren motorischer Antrieb mit permanenterregten Synchronmaschinen erfolgt, wobei die Klemmen der Synchronmaschine über Schalter mit ein Bremsmoment erzeugenden Einrichtungen in Verbindung stehen,
wobei eine Steuerung oder Regelung aktiviert wird, die in Abhängigkeit von den Betriebsverhältnissen des Fahrzeugs und den geforderten Bremswerten die Bremsung der vorhandenen Motoren und die federspeicherbasierten Reibungsbremsen einzeln und nacheinander zuschaltet,
und wobei die geforderten Bremswerte von einem Betreiber oder in Normen vorgegebenen Grenzwerten für die Bremsverzögerung entsprechen **dadurch gekennzeichnet, dass**
- als Eingangsgröße zur Steuerung/Regelung der Gesamtbremsleistung des Fahrzeuges eine oder mehrere der folgenden Betriebsverhältnisse des Fahrzeuges mit einer hinterlegten Soll-Kennlinie zur Bestimmung eines Soll-Ist-Vergleiches verwendet werden:
- Messung der Verzögerung durch geeignete Sensoren,
- Messung der Motorströme und Berechnung durch Maschinenmodell,
- Messung der Nulldurchgänge der Motorspannungen und Ermittlung der Verzögerung durch Varianzbestimmung
- Messung der Motor- bzw. Zwischenkreisleistung,
- Messung der Leistung am Bremswiderstand,
- Messung der Drehzahlen,
- Temperaturerfassungen,
- Lastzyklenerfassung in Kombination mit Luftfederdruckerfassung,
- anhand der erfassten Betriebswerte eine Ist-Kennlinie gebildet und mit einer zur Einhaltung der geforderten Bremswerte gültigen Soll-Kennlinie verglichen wird und dass unter Berücksichtigung eines Toleranzbandes bei Soll-Ist-Abweichung der Bremsung weitere Motorbremsen bzw. federspeicherbasierte Reibungsbremsen zugeschaltet werden, und
- eine aus der Drehzahl der Motoren und der Beschleunigung des Fahrzeugs gebildete Ist-Kennlinie mit einer in einem nichtflüchtigen Speicher hinterlegten Soll-Kennlinie verglichen wird und bei negativer Soll-Ist-Abweichung die Bremsung der Motoren bzw. der federspeicherbasierten Reibungsbremsen zugeschaltet wird.

2. Verfahren nach Anspruch 1, **dadurch gekennzeichnet, dass** sowohl die Bremsleistung jedes Motors, als auch die Bremsleistung der federspeicherbasierten Reibungsbremsen voneinander unabhängig zugeschaltet werden.

3. Verfahren nach einem der voranstehenden Ansprüche, **dadurch gekennzeichnet, dass** das gleichzeitige Zuschalten von mehr als einer Brems-Komponente durch einen logischen Verschlussmechanismus verhindert wird.

4. Verfahren nach Anspruch 1 oder 2, **dadurch gekennzeichnet, dass** alle federspeicherbasierten Reibungsbremsen gemeinsam zugeschaltet werden.

5. Verfahren nach einem der voranstehenden Ansprüche, **dadurch gekennzeichnet, dass** die Bremsung der Motoren bzw. der federspeicherbasierten Reibungsbremsen abschaltbar gestaltet wird.

6. Verfahren nach Anspruch 1, **dadurch gekennzeichnet, dass** mindestens zu einer der ein Bremsmoment erzeugenden Einrichtungen ein Kondensator parallelgeschaltet ist.

## Claims

1. Method for braking electrically driven rail vehicles which are fitted with spring-store-based friction brakes and whose motorized drive is provided by permanently excited synchronous machines, wherein the terminals for the synchronous machine are connected by switches to installations which generate a brake torque, wherein a controller or regulator is activated which activates the braking of the provided motors and the spring-store-based friction brakes individually and successively as a function of the operating conditions of the vehicle and the required braking values, and wherein the required braking values correspond to limit values for the braking deceleration that are predefined by an operator or by standards, **characterized in that**,
- as input variables for controlling/regulating the overall braking power of the vehicle, one or more of the following operating conditions are used with a stored nominal characteristic curve in order for a nominal/actual comparison to be determined:
- measurement of the deceleration by suitable sensors;
- measurement of the motor currents and calculation by way of a machine model;
- measurement of the zero crossings of the motor voltages and determining the deceleration by variance determination;
- measurement of the motor or intermediate circuit output;
- measurement of the output in braking resistance;
- measurement of the rotating speeds;
- temperature measurements;
- load cycle detection in combination with the detection of air spring pressure;
- an actual characteristic curve is formed by means of the detected operating values and compared with a nominal characteristic curve applicable for maintaining the required braking values and **in that** further motor brakes or spring-store-based friction brakes, respectively, are activated in the event of an nominal/actual deviation in braking, while taking into account a tolerance band; and
- an actual characteristic curve formed by the rotating speed of the motors and the acceleration of the vehicle is compared with a nominal characteristic curve stored in a nonvolatile memory, and the braking of the motors or of the spring-store-based friction brakes is activated in the event of a negative nominal/actual deviation.

2. Method according to Claim 1, **characterized in that** the braking power of each motor as well as the braking power of the spring-store-based friction brakes are activated independently of one another.

3. Method according to one of the preceding claims, **characterized in that** the simultaneous activation of more than one brake component is prevented by a logical lock mechanism.

4. Method according to Claim 1 or 2, **characterized in that** all spring-store-based friction brakes are collectively activated.

5. Method according to one of the preceding claims, **characterized in that** the braking of the motors or of the spring-store-based friction brakes is designed so as to be able to be deactivated.

6. Method according to Claim 1, **characterized in that** a capacitor is connected in parallel to at least one of the installations which generate a braking torque.

## Revendications

1. Procédés de freinage de véhicules ferroviaires entraînés électriquement, qui sont équipés de freins de friction reposant sur un ressort accumulateur et dont l'entraînement motorisé s'effectue par des machines synchrones à excitation permanente, les bornes de la machine synchrone étant en liaison par l'intermédiaire d'interrupteurs avec des dispositifs produisant un couple de freinage,
dans lequel,
on active une commande ou un réglage qui, en fonction des conditions de fonctionnement du véhicule et des valeurs de freinage exigées, branche individuellement et l'un après l'autre le freinage des moteurs présents et les freins de friction reposant sur un ressort accumulateur,
et dans lequel les valeurs de freinage exigées correspondent aux valeurs limites de la décélération par freinage prescrites par un opérateur ou dans des normes,
**caractérisés en ce que**
- on utilise comme grandeur d'entrée pour la commande/le réglage de la puissance totale de freinage du véhicule une ou plusieurs des conditions de fonctionnement suivantes du véhicule avec une courbe caractéristique de consigne mise en mémoire pour la détermination d'une comparaison consigne-réelle :
- mesure de la décélération par des capteurs appropriés,
- mesure des courants de moteurs et calcul par un modèle de machine,
- mesure des passages par zéro des tensions de moteur et détermination de la décélération par détermination d'une variance,
- mesure de la puissance de moteur ou de circuit intermédiaire,
- mesure de la puissance à la résistance de frein,
- mesure des vitesses de rotation,
- relevés de température,
- relevé de cycle de charge en combinaison avec relevé d'une pression de ressort pneumatique,
- à l'aide des valeurs de fonctionnement relevées, on forme une courbe caractéristique réelle et on la compare à une courbe caractéristique de consigne valable pour le maintien des valeurs de freinage exigées et **en ce que**, en tenant compte d'une bande de tolérance de l'écart consigne-réelle du freinage, on branche d'autres freins moteurs ou freins de friction reposant sur un ressort accumulateur et
- on compare une courbe caractéristique réelle formée de la vitesse de rotation des moteurs et de l'accélération du véhicule à une courbe caractéristique de consigne mise en mémoire dans une mémoire rémanente et, si l'écart consigne-réelle est négatif, on branche le freinage des moteurs ou des freins de friction reposant sur un ressort accumulateur.

2. Procédés suivant la revendication 1, **caractérisés en ce que** l'on branche indépendamment l'une de l'autre tant la puissance de frein de chaque moteur qu'également la puissance de frein des freins de friction reposant sur un ressort accumulateur.

3. Procédés suivant l'une des revendications précédentes, **caractérisés en ce que** l'on empêche le branchement simultané de plus d'un composant de frein par un mécanisme de fermeture logique.

4. Procédés suivant l'une des revendications 1 ou 2, **caractérisés en ce qu'**on branche conjointement tous les freins de friction reposant sur un ressort accumulateur.

5. Procédés suivant l'une des revendications précédentes, **caractérisés en ce que** l'on fait en sorte que l'on puisse arrêter le freinage des moteurs ou des freins de friction reposant sur un ressort accumulateur.

6. Procédés suivant la revendication 1, **caractérisés en ce qu'**au moins un condensateur est monté en parallèle à l'un des dispositifs produisant un couple de freinage.
